Europäisches Patentamt

European Patent Office

Office européen des brevets

(11) Publication number: **0 455 617 A1**

(12) # EUROPEAN PATENT APPLICATION

(21) Application number: 91850110.7

(22) Date of filing: 30.04.91

(51) Int. Cl.⁵: **B65G 53/50, F15D 1/08, // B65G53/22**

(30) Priority: 04.05.90 SE 9001601

(43) Date of publication of application: 06.11.91 Bulletin 91/45

(84) Designated Contracting States: AT BE CH DE DK FR GB IT LI NL

(71) Applicant: ABS BYGGSYSTEM AB P O Box 10 S-121 23 Farsta (SE)

(72) Inventor: Andersson, Jan-Erik Fasanvägen 8 S-641 93 Katrineholm (SE)

(74) Representative: Nilsson, Karl et al STENHAGEN PATENTBYRA AB Box 17 709 S-118 93 Stockholm (SE)

(54) **An arrangement for suppressing inhomogenization of particle mixtures.**

(57)    An arrangement for suppressing inhomogenization of a gas-suspended particle mixture during passage of the suspension from the outlet orifice (3) of a transport conduit (2) to a collecting station (1) includes a nozzle (4) connected to the outlet orifice (3). The nozzle (4) includes a nozzle channel (5) which is intended to conduct particle suspension through the nozzle. The nozzle channel has an elongated cross-sectional shape with a small cross-measurement and a large length measurement as seen in relation to the cross-dimension of the outlet orifice. The cross-sectional area of the channel (5) is greater than the cross-sectional area of the outlet orifice (3), so that both the speed of the suspension flow and the pressure in the flow will decrease during the passage of the suspension through the nozzle (4).

Fig. 1

EP 0 455 617 A1

The present invention relates to an arrangement for suppressing inhomogenization of a gas-suspended, particularly air-suspended particle mixture during passage of the suspension from the outlet opening of a transport line to a collecting station, for instance a hopper or a silo. By particle mixture is meant here both particle mixtures comprised of particles of different materials and mixtures comprised of particles of different sizes but originating from one and the same material.

Examples of particle mixtures of the kind concerned include those which form a self-levelling compound, plaster or mortar, subsequent to the addition of liquid or water, and also those particle mixtures occurring within the manufacturing industry with which it is important to maintain the mixture in an homogenous and uniform state. In the manufacture of self-levelling compound, for instance, an appropriate, dry particle mixture is often transported by lorry from the factory to its place of use, where the mixture is blown into a hopper or a silo, from where the mixture is metered and mixed with water as required. When dry self-levelling compound is blown conventionally from a lorry into a silo, for instance through a transport conduit which discharges substantially tangentially into the silo, the self-levelling compound ingredients tend to separate, so as to form a bottom layer of predominantly coarse and heavy particles and a top layer of predominantly fine and light particles, wherein the mixture in said layers may not correspond to prescribed specifications with subsequent scrapping or reclaiming problems.

The object of the present invention is to provide a novel and advantageous device with which the problem of inhomogenization of the aforesaid kind is at least essentially avoided.

To this end, it is proposed, in accordance with the invention, that in an arrangement of the kind recited in the introduction, there is connected to the outlet opening of the transport conduit a nozzle which presents at least one suspension-conducting channel and which has an elongated cross-sectional shape having, in relation to the cross-dimension of the outlet opening, a cross-measurement which is so small and a length-measurement which is so large as to ensure a substantially laminar flow of suspension through the nozzle, wherein the cross-sectional area available to the flow of particle suspension through the nozzle channel or channels is so much larger than the cross-sectional area of the outlet opening that both the speed of the suspension flow and the pressure of said flow will decrease during the passage of said suspension through the nozzle. This arrangement greatly avoids inhomogenizing turbulence in the suspension which exits from the outlet opening of the transport conduit at high speed, wherein lowering of the suspension speed in substantially laminar flow conditions results in a marked decrease in inhomogenization.

The relatively narrow flow cross-section available to the suspension flow results in the generation of friction between the channel walls and the suspended particles, this friction tending to retard more pronouncedly those particles which have the greatest kinetic energy in a desired fashion, resulting in a further reduction in inhomogenization tendencies.

According to the invention, the decrease in channel length required to achieve the result desired can be achieved when the channel or each channel is formed at least substantially by two essentially parallel plates or discs which extend away from the outlet opening and which are curved or undulated in their longitudinal directions. In this way, particles in the suspension flowing from the outlet opening of the transport conduit will contact the channel walls to an increasing extent and will be retarded by the friction resulting from such contact. Alternatively, or additionally, increased contact with the channel walls, and frictional retardation of the particles due to friction, can be achieved by using a nozzle which has two or more mutu-ally adjacent channels, the cross-sections of which will preferably have a smaller size than the cross-section of the channel of a nozzle which is provided with only one channel. Neither need the channel walls be fully parallel with one another. On the contrary, an advantage is afforded when the width of the slot-like space decreases in a direction towards the nozzle orifice, provided that no disturbing back pressure is generated within the nozzle.

An advantage is afforded when the channel sides extend in the channel direction beyond the channel bottom while delimiting a slot-like space which is open at least downwardly to form the nozzle orifice, thereby enabling particles to fall towards the collecting station along any part of the nozzle length. The nozzle orifice may, with particular advantage, comprise a substantially horizontal, downwardly facing rear opening part which commences at the lower end of the channel part and a front opening part adjoining said rear opening part and extending obliquely forwards and downwards, thereby avoiding undesirable dusting of the remainder of the suspension at the outer end of the nozzle arrangement.

The invention will now be described in more detail with reference to the accompanying drawings, in which

Figure 1 illustrates highly schematically part of a silo provided with one embodiment of an inventive arrangement at present preferred;

Figure 2 is a sectional view taken on the line A-A and B-B in Figure 1; and

Figure 3 shows in full lines a horizontal projection of the arrangement illustrated in Figure 1, and with broken lines alternative embodiments of the inventive arrangement.

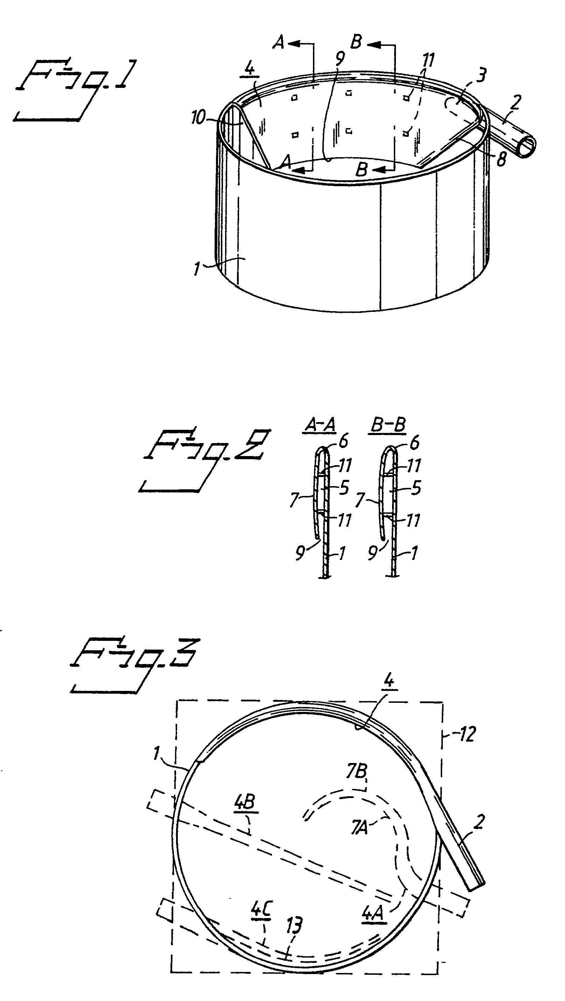

In Figure 1, the reference 1 identifies part of a silo. Although not shown, the illustrated silo part 1 has connected thereto an upper and a lower silo part, said lower silo part incorporating an outfeed means, not shown. Connecting tengentially and substantially horizontally with the silo part 1 is a transport conduit 2, through which a gas-suspended, for instance air-suspended particle mixture is fed to the silo. Connected to the outlet opening 3 of the conduit 2 discharging into the silo is a nozzle, referenced generally at 4, which includes a nozzle channel 5, which is illustrated in cross-section in Figure 2. The nozzle channel is formed by two essentially parallel discs or plates which extend away from the discharge orifice 3 and curve arcuately along their length extensions. One of the discs or plates is formed by part of the silo wall, whereas the other disc or plates has the form of a plate 7 which is welded along its substantially horizontal upper edge 6 to the inner surface of the silo part 1. The channel 5 in the nozzle 4 has an elongated cross-section of small cross-measurement and large length measurement in comparison with the cross-dimension or diameter of the transport conduit, so that the particle suspension exiting through the orifice 3 will have a substantially laminar flow during its passage through the channel 5. The channel 5 has a bottom 8 which is inclined obliquely downwards from the orifice 3 at an angle which preferably exceeds the angle of repose of the particulate material present in the suspension. The nozzle 4 is closed along its upper horizontal edge 6 and along its bottom 8 and has a nozzle orifice or opening whose area, similar to the cross-sectional area of the nozzle channel 5, substantially exceeds? the cross-sectional area of the conduit 2 and the nozzle orifice 3 respectively and which is comprised of a substantially horizontal, downwardly facing rear opening part 9 which commences at the lower end of the channel bottom 8 and an obliquely forwardly and downwardly facing front opening part 10 which adjoins the rear opening part 9. As illustrated in Figure 2, the distance between the substantially vertical walls of the nozzle channel can decrease slightly in a direction towards the nozzle opening or orifice 9, 10. The reference numeral 11 identifies spacer elements which are connected to the channel walls, for instance welded thereto.

When the particle suspension flows through the nozzle 4, the suspension exiting from the nozzle orifice 3 is given a laminar flow pattern while reducing the speed and pressure of the suspension at the same time. Friction is generated between the nozzle walls and primarily those particles which have a high kinetic energy. This avoids to a great extent separation or inhomogenization of the particle mixture falling down from the nozzle opening 9, 10.

Figure 3 is a horizontal projection of the nozzle 4. As will be seen from Figure 3, the invention can be realized in many different ways. For instance, as indicated with the broken-line square 12, the collecting station has a horizontal sectional shape other than circular. The reference sign 4A identifies a nozzle constructed from undulating curved plates 7A, 7B, while reference sign 4B identifies a nozzle constructed from flat plates. 4C identifies a nozzle which comprises two parallel nozzle channels mutually separated by a common partition wall 13. Each nozzle channel may be open along one or more, for instance all, of the edge surfaces of the discs or plates forming the channel, and the discs or plates may be inclined at any desired angle to a verticle plane. The length of the nozzle can be freely chosen according to requirements, the result generally being favoured by longer nozzle lengths. It will thus be understood that the invention is not restricted to the described and illustrated embodiments, but can be realized in any desired manner within the scope of the inventive concept defined in the following Claims. Thus, according to the inventive concept, the suspension exiting from the outlet opening is conducted through at least one flat nozzle channel, the smallest dimension of which is so small in relation to the diameter of the outlet opening (= the diameter of the transport conduit), as to create a laminar flow pattern and to generate friction between the channel walls and the particles present in the suspension. At the same time, the channel cross-sectional area may be sufficient to retard the speed of the suspension flow and also to lower the pressure therein.

A nozzle construction which is particularly favourable to each particular application can be arrived at experimentally, wherein the conditions set forth above and in the following Claims provide good guidelines in this respect and reduce considerably the amount of experimental work required. In the case of arcuate or undulating curved nozzle channels, the radius of curvature should, in practice, not be smaller than four times the hydraulic diameter $d_h$ of the transport conduit ($d_h = 4A/S$, where A is the area of the conduit and S is the circunference of the conduit and where $d_h$ is thus equal to the diameter of the conduit at the circular cross-section thereof). In the case of a curved channel, the length of the nozzle channel may suitably be at least ten times, and in the case of a straight channel at least twelve times as large as the hydraulic diameter of the transport conduit. In practice, a radius of curvature of 12 $d_h$ and a nozzle length of 30 $d_h$ were chosen for a nozzle according to Figure 1 for use with fine-grain material which was blown tangentially in the nozzle at its inner end through a pipe of circular cross-section, said nozzle being open at its bottom along the major part of its length. The nozzle had an essentially rectangular cross-section with a vertical extension of 6 $d_h$ and a width which narrowed uniformly from the outer end of the nozzle from 0.6 $d_n$ to 0.1 $d_n$.

## Claims

1. An arrangement for suppressing the inhomogenization of a gas-suspended, particularly an air-suspended particle mixture during the passage of said mixture from the outlet orifice (3) of a transport conduit (2) to a collecting station (1), for instance a hopper or a silo, **characterized** by a nozzle (4) which is connected to the outlet orifice (3) of the conduit (2) and which includes at least one nozzle channel (5) intended for conducting the particle suspension through said nozzle, said channel (5) having an elongated cross-sectional shape, the cross-measurement of which is so small in relation to the cross-dimension of the outlet orifice and the length dimension of which is so large in relation to said cross-dimension of said outlet orifice as to ensure a substantially laminar flow of suspension through the nozzle (4), and wherein the cross-sectional area available to the flow of particle suspension through the nozzle channel (5) or nozzle channels so exceeds the cross-sectional area of the outlet orifice (3) that both the speed of the particle suspension flow and the pressure in said flow decreases as the suspension flows through the nozzle (4).

2. An arrangement according to Claim 1, **characterized** in that the nozzle channel (5) or each said nozzle channel is at least substantially comprised of two substantially parallel discs or plates (1, 7; 7A, 7B) which extend away from the outlet orifice (3) and which are preferably curved arcuately and undulate in their longitudinal direction.

3. An arrangement according to Claim 2, **characterized** in that the nozzle (4C) has at least two mutually adjacent nozzle channels, and in that mutually adjacent channels are separated by a common partition wall (13).

4. An arrangement according to any one of Claims 1-3, **characterized** in that the height or vertical extension of the nozzle (4) increases from the point of its connection with the outlet conduit (2) towards the nozzle opening (9, 10), and in that the sides of the nozzle channel are substantially vertical and a bottom (8) joining said sides at the bottom of the nozzle slopes downwardly towards the nozzle opening at an angle which is at least equal to the angle of repose of the material mixture.

5. An arrangement according to Claim 4, **characterized** in that the upper side (6) of the nozzle (4) is substantially horizontal.

6. An arrangement according to Claim 4 or 5, **characterized** in that the nozzle (4) is closed along the whole of its upper side (6).

7. An arrangement according to any one of Claims 4-6, **characterized** in that the sides (1, 7) of the nozzle channel extend in the direction of said channel forwardly and beyond the channel bottom (8) such as to define a slot-like space which is open at least downwardly so as to form the nozzle opening (9, 10).

8. An arrangement according to Claim 7, **characterized** in that the nozzle opening (9, 10) is comprised of a substantially horizontal, downwardly facing rear opening part (9) which commences at the lower end of the channel bottom (8) and an obliquely forwardly and downwardly facing front opening part (10) which adjoins the rear opening part (9).

9. An arrangement according to Claim 7 or 8, **characterized** in that the width of the slot-like space decreases in a direction towards the nozzle opening (9, 10).

10. An arrangement according to any one of Claims 2-9 having at least one arcuately curved nozzle channel located adjacent a silo (1) or hopper having a circular horizontal section and including a transport conduit (2) which discharges substantially tangentially into said silo or hopper, **characterized** in that the outer, curved channel side is formed by the wall of the silo (1) or hopper.

*Fig.1*

*Fig.2*

A-A    B-B

*Fig.3*

| | European Patent Office | **EUROPEAN SEARCH REPORT** | Application Number |

| **DOCUMENTS CONSIDERED TO BE RELEVANT** | | | EP 91850110.7 |

| Category | Citation of document with indication, where appropriate, of relevant passages | Relevant to claim | CLASSIFICATION OF THE APPLICATION (Int. Cl.5) |
|---|---|---|---|
| A | GB - A - 2 209 729 (VOLSTATIC) * Fig. 5 * | 1 | B 65 G 53/50 F 15 D 1/08// B 65 G 53/22 |
| A | US - A - 4 605 352 (SCOTT) * Fig. 4,13 * | 1 | |
| A | AT - B - 363 385 (FUCHS) * Fig. 1 * | 1 | |
| | | | **TECHNICAL FIELDS SEARCHED (Int. Cl.5)** |
| | | | B 65 G F 15 D |
| | The present search report has been drawn up for all claims | | |

| Place of search | Date of completion of the search | Examiner |
|---|---|---|
| VIENNA | 02-07-1991 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)